# EUROPEAN PATENT SPECIFICATION

(11) **EP 3 621 441 B1**
(45) Date of publication and mention of the grant of the patent: **07.07.2021**
(21) Application number: 18721815.1
(22) Date of filing: 08.05.2018
(51) Int. Cl.: A21B 3/04, F24C 7/08, G05D 23/19

(54) **METHOD FOR CONTROLLING A COOKING PROCESS IN A COOKING OVEN**
VERFAHREN ZUM STERUERN EINES KOCHVORGANGS IN EINEM GARGERÄT
PROCÉDÉ DE RÉGULATION D'UN PROCESSUS DE CUISSON DANS UN FOUR DE CUISSON

(30) Priority: 08.05.2017 EP 17169852
(43) Date of publication of application: 18.03.2020
(73) Proprietor: Electrolux Appliances Aktiebolag, 105 45 Stockholm (SE)
(72) Inventor: BRENZ, Reiner, 91541 Rothenburg ob der Tauber (DE); SPECHT, Trevor, 91541 Rothenburg ob der Tauber (DE); LY, Chan-Thoeurn, 91541 Rothenburg ob der Tauber (DE)
(74) Representative: Electrolux Group Patents
(86) International application number: PCT/EP2018/061930
(87) International publication number: WO 2018/206608

(56) References cited:
- EP-A1- 2 123 981
- EP-A1- 2 993 409
- EP-A2- 1 213 542
- EP-A2- 1 719 417
- JP-A- S59 157 711
- US-A1- 2013 171 305

## Description

The present invention relates to a method for controlling a cooking process in an oven cavity of a cooking oven, in particular a domestic cooking oven. Further, the present invention relates to a cooking oven with at least one oven cavity adapted for said method.

A method for heating up food stuff inside an oven cavity of a cooking oven may be controlled by a cooking program basing on an automatic algorithm. Usually, that algorithm has been programmed by the manufacturer of the cooking oven. Further, said algorithm has been setup for transferring heating energy to specified food stuff or to a group of specified food stuffs, which require the same amount of total heating energy.

The cooking ovens according to the prior art control the heating of food stuff indirectly, wherein primarily the heating of the oven cavity of the cooking oven is controlled. That is achieved by controlling the heating elements of the oven cavity in dependency of the temperature of the oven cavity. Practically, the oven cavity is heated up to a temperature that is chosen according to the type of the food stuff, wherein a food stuff specific oven temperature needs to be known or to be looked-up by the user, e.g. in a recipe or oven manual. The food stuff is heated up inside the heated oven cavity for some time at said food stuff specific oven temperature until it is considered to be suitably cooked. It is also known that a suitable target core temperature of the food stuff is monitored by a temperature sensor needle, wherein the heating of the oven cavity is automatically controlled in dependence of the signal from said temperature sensor needle.

The control methods according to the prior art substantially base on the detected temperatures in the oven cavity. Various attempts have been made already in order to reduce the energy consumption of an oven cavity controlled in that way. However, it has become clear now that the concept of handling the energy consumption of the heated oven cavity on the bases of the detected temperature cannot fulfil future legal restrictions on energy consumption in this field, in particular the A++ and A+++ energy labels.

EP 2 993 409 A1 discloses a method for electrical heating of food in a cooking appliance. The food inside an oven cavity is heated up until a predetermined heat-up temperature is reached. A food load of said food is determined. A power control is activated in order to maintain a predetermined food preparation temperature in the oven cavity. The power control is adjusted according to the determined food load, wherein the predetermined food preparation temperature is controlled.

EP 1 213 542 A2 discloses a controller for controlling the amount of energy supplied to an oven cavity for cooking food. In a heating up phase the temperature increases until the temperature has reached an upper predetermined value. In a maintenance phase the temperature is maintained. In a residual phase the temperature cools down. After the temperature has reached a lower predetermined value, the oven cavity is heated up again. The heating up phase, the maintenance phase and the residual phase are repeated.

It is an object of the present invention to provide a method for controlling a cooking process in an oven cavity of a cooking oven, which reduces the energy consumption by low complexity.

The object of the present invention is achieved by the method for controlling a cooking process in an oven cavity of a cooking oven according to the invention.

In one embodiment, a method for controlling a cooking process in an oven cavity of a cooking oven is provided comprising the steps of
- placing food stuff inside the oven cavity,
- setting at least one cooking parameter,
- setting a maximum heating energy to be transferred into the oven cavity and/or the food stuff,
- determining a heating power profile of the heating power as a function of time during a cooking time depending on said at least one cooking parameter,
- wherein the total heating energy obtained by summing up or integrating the heating power of the heating profile over time for the cooking time is less than or equal to the maximum heating energy,
- heating the oven cavity and/or the food stuff by transferring heating power during said cooking time according to the determined heating profile, in particular at least in a time control mode.

In one embodiment according to the present invention a method for controlling a cooking process in an oven cavity of a cooking oven is provided, wherein:
- food stuff is arranged inside the oven cavity,
- at least one cooking parameter is set,
- the method comprises a time control mode in the beginning of the cooking process,
- the time control mode calculates a predetermined transmission of heating power to the oven cavity as function of the time and a corresponding predetermined transmitted heating energy during said time control mode,
- the heating power as function of the time and the predetermined transmitted heating energy (E) base on empiric and/or calculated data and depends on the set cooking parameter,
- the time control mode includes a heating up phase and a thermal inertia phase,
- the time control mode starts with the heating up phase,
- during the heating up phase the oven cavity is heated up by activating at least one heating element of said oven cavity,
- the heating up phase is stopped, after the predetermined heating energy has been transmitted to the oven cavity,
- during the thermal inertia phase all heating elements of the oven cavity are deactivated, and
- the thermal inertia phase is stopped, after the food stuff and the oven cavity should have reached a thermal equilibrium according to the empiric and/or calculated data.

The main idea of this embodiment of the invention is the time control mode with the heating up phase and the thermal inertia phase, wherein the transmission of heating power to the oven cavity depends on the time. The transmission of the power to the oven cavity and its development are predetermined and independent of detected temperatures and any other detected cooking parameters. The activation and deactivation of the heating element(s) during the time control mode is predetermined by a program and/or an algorithm and independent of any detected cooking parameters. The program or algorithm bases on empiric and/or calculated data, but not on any detected cooking parameters.

During the heating up phase a big amount of heating energy is transmitted to the oven cavity, while a small amount of heating energy is absorbed by the food stuff. During the thermal inertia phase thermal energy is transmitted from the oven cavity to the food stuff, while the heating elements are deactivated. The combination of the heating up phase and the thermal inertia phase reduces the energy consumption.

The predetermined heating energy transmitted to the oven cavity during the heating up phase depends on the at least one set cooking parameter and on the condition, when the food stuff and the oven cavity are in thermal equilibrium according to the empiric and/or calculated data.

In general, at least in the time control mode, a measurement of temperature(s) in the cooking process by temperature sensors for controlling the cooking process does not take place.

Preferably, the at least one cooking parameter is manually set by a user and/or automatically set by a cooking program.

In particular, the at least one set cooking parameter relates to one or more properties of the food stuff.

Further, the at least one set cooking parameter may relate to one or more properties of the oven cavity and/or the cooking oven.

For example, the at least one set cooking parameter is a set core temperature of the food stuff at the end of the time control mode.

Especially, the predetermined transmitted heating energy during the time control mode or during the total cooking process is smaller than or equal to a maximum amount of heating energy transmitted to the oven cavity during the time control mode or during the total cooking process. The definition of the maximum amount of heating energy transmitted to the oven cavity contributes to low energy consumption. Factually, the energy consumption is limited.

For example, the at least one set cooking parameter is the maximum amount of heating energy transmitted to the oven cavity.

Preferably, a plurality of functions of the heating power in dependence of the time is predetermined on the basis of the empiric and/or calculated data and stored in a memory, wherein each function corresponds with a kind and/or mass of the food stuff. Said functions may be stored as table of values, wherein one current power value corresponds with each point in time. Further, said functions may be stored as formulas allowing the calculation of the current power value in dependence of the time. Moreover, benchmark data of said functions may be stored, wherein the current power values may be calculated by interpolation.

According to one embodiment, the function of the heating power in dependence of the time is a continuous or a quasi-continuous function, wherein the time integral of said function is the predetermined transmitted heating energy. This is applicable to a cooking oven with one or more radiant heating elements.

According to another embodiment, the function of the heating power in dependence of the time is a rectangular function, wherein a constant heating power is activated during first time intervals and the heating power is deactivated during second time intervals, and wherein the product of said constant heating power and total time of said first time intervals is the predetermined transmitted heating energy. This is particularly applicable to a microwave oven, wherein the magnetron provides a constant heating power.

In particular, the time control mode includes a thermal cycling phase, wherein said thermal cycling phase is performed after the heating up phase and before the thermal inertia phase, and wherein the at least one heating element of said oven cavity is alternatingly deactivated and activated.

In this case, the predetermined heating energy transmitted to the oven cavity during the heating up phase and the thermal cycling phase may depend on the at least one set cooking parameter.

Preferably, the at least one heating element is continuously activated during the heating up phase.

Further, the relation of the transmitted heating energy and the time may depend on the mass and kind of food stuff, the volume and the thermal capacity of the oven cavity and/or the insulation of the cooking oven. If the mass of the food stuff is increased, then the number of the cycling phases depends on the extent of said increase. For example, if the increase of the mass is small, e.g. about 50 %, then the duration of the cycling phase would increase. Further, if the increase of the mass would be large, e.g. about 100 %, then an additional cycling phase would be required. An increase of the thermal capacity of the oven cavity requires an increase of the duration of the cycling phases, wherein the number of said cycling phases does not be changed.

An increase of the volume of the oven cavity results in a larger thermal capacity of said oven cavity, if the same material and thickness of the cavity wall is used. Thus, the increase of the volume of the oven cavity requires an increase of the duration of the cycling phases, wherein the number of said cycling phases is not changed. If the insulation of the oven cavity is improved, then the temperature in the centre of said oven cavity increases, but a change of the duration and/or number of the cycling phases is not necessary.

Moreover, the numbers of activations and deactivations of the at least one heating element of the oven cavity may depend on the mass and kind of food stuff, the volume and the thermal capacity of the oven cavity and/or the insulation of the cooking oven.

Additionally, the durations of the activated and deactivated states of the at least one heating element of the oven cavity may depend on the mass and kind of food stuff, the volume and the thermal capacity of the oven cavity and/or the insulation of the cooking oven. If the mass of the food stuff is increased, then the ratio of the durations of the activated and deactivated states depends on the extent of said increase. For example, if the increase of the mass is small, e.g. about 50 %, then the ratio of the durations would increase. Further, if the increase of the mass would be large, e.g. about 100 %, then the additional cycling phase would be required. The increase of the thermal capacity of the oven cavity requires an increase of the total duration of the cycling phases.

The increase of the volume of the oven cavity results in a larger thermal capacity of said oven cavity, if the same material and thickness of the cavity wall is used. Thus, the increase of the volume of the oven cavity requires an increase of the ratio of the durations of the cycling phases. If the insulation of the oven cavity is improved, then the temperature in the centre of said oven cavity increases, but a change of the ratio of the durations is not required.

The ratio of the durations of the activated and deactivated states is a tuning of the cooking process and can be confirmed by a test.

Alternatively or additionally, the core temperature of the food stuff may be detected by at least one food probe.

Furthermore, the method comprises a temperature control mode, wherein temperature control mode is started, after the time control mode has been finished. The temperature control mode bases on detected temperature values. In contrast, the time control mode is predetermined and independent of detected temperatures and any other detected cooking parameters.

Preferably, the control of the at least one heating element in the temperature control mode depends on at least one temperature detected in the oven cavity and/or in the food stuff.

Further, the present invention relates to a cooking oven with at least one an oven cavity, wherein the cooking oven is adapted for the method mentioned above.

Novel and inventive features of the present invention are set forth in the appended claims.

The present invention will be described in further detail with reference to the drawing, in which
- FIG 1: illustrates schematic diagrams of the temperature and the energy as functions of time during a cooking process in an oven cavity controlled by a method according to a preferred embodiment of the present invention, and
- FIG 2: illustrates schematic diagrams of temperatures as functions of time during a thermal cycling phase according to the preferred embodiment of the present invention.

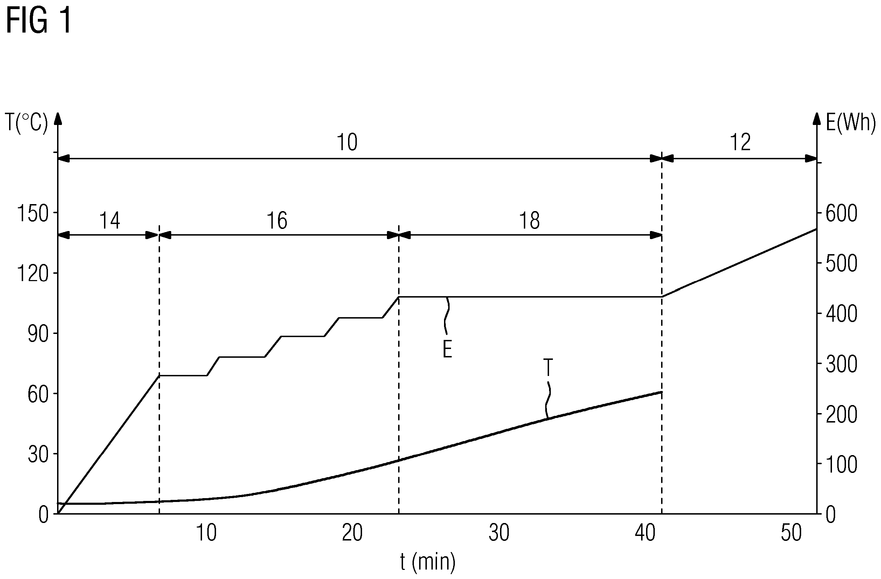

FIG 1 illustrates schematic diagrams of the temperature T and the energy E as functions of time t during a cooking process in an oven cavity controlled by a method according to a preferred embodiment of the present invention. The temperature T relates to a core temperature of a food stuff inside the oven cavity.

The method for controlling the cooking process comprises a time control mode 10 and a temperature control mode 12. The time control mode 10 controls a first part of the cooking process, while the temperature control mode 12 controls a second part of said cooking process. In turn, the time control mode 10 is subdivided into three subsequent phases. The time control mode 10 includes a heating up phase 14, a thermal cycling phase 16 and a thermal inertia phase 18. The time control mode 10 includes a time based heating algorithm, while the temperature control mode 12 controls the second part of the cooking process in dependence of the temperature.

In this example, the first fifty-one minutes of the cooking process are shown, wherein the time controlled second part of said cooking process 10 takes forty-one minutes. Therefrom the heating up phase 14 takes seven minutes, the thermal cycling phase 16 takes sixteen minutes and the thermal inertia phase 18 takes eighteen minutes.

The time based heating algorithm of the time control mode 10 is independent from the temperature. The time based heating algorithm is programmed by the manufacturer of the cooking oven. Preferably, the heating algorithm is programmed by the manufacturer on the basis of tests performed previously with the cooking oven. Further, the heating algorithm may be programmed by the manufacturer on the basis of tests performed with different specified food stuffs inside said cooking oven. The heating algorithm is determined empirically by the manufacturer of the cooking oven for the oven cavity, food stuff, predetermined target core temperature and heating mode.

The function of the heating power in dependence of the time is predetermined on the basis of the empiric and/or calculated data and stored in a memory. Preferably, a plurality of functions of the heating power in dependence of the time is stored in the memory, wherein each function corresponds with the kind, the mass and/or other cooking parameters of the food stuff. Said functions may be stored as table of values, wherein one current power value corresponds with each point in time t. Further, said functions may be stored as formulas allowing the calculation of the current power value in dependence of the time t. Moreover, benchmark data of said functions may be stored, wherein the current power values may be calculated by interpolation.

In the beginning of the cooking process an amount of heating energy is determined in dependence of the properties of the cooking oven, the amount and kind of food stuff and the predetermined target temperature of the core of the food stuff, i.e. a central portion of said food stuff.

Preferably, the amount of heating energy during the time control mode or during the total cooking process is smaller than or equal to a predetermined maximum amount of heating energy. The definition of the maximum amount of heating energy transmitted to the oven cavity contributes to low energy consumption. Effectively, the energy consumption is limited. The time integral of function of the heating power is the maximum amount of heating energy.

During the heating up phase 14 the heating elements of the cooking oven are continuously activated without any interruption or modulation. Preferably, the heating elements of the cooking oven run at maximum heating power. The heating up phase 14 allows that the heating energy is transmitted as fast as possible to the oven cavity. During the heating up phase 14 the oven cavity absorbs the majority of energy.

During the thermal cycling phase 16 the heating elements are alternatingly deactivated and activated. In this example, the heating elements are alternatingly deactivated for three minutes and then activated for one minute. In particular, the thermal cycling phase 16 allows a heat exchange from the oven cavity to the food stuff. The thermal cycling phase 16 improves the efficiency of the heating method according to the present invention, wherein the target core temperature of the food stuff is reached relative fast.

During the thermal inertia phase 18 the heating elements are deactivated. Thus, no further energy is transmitted to the oven cavity during said thermal inertia phase 18. In particular, the thermal inertia phase 18 allows a heat exchange from the oven cavity to the core of the food stuff. Further, the thermal inertia phase 18 allows a heat exchange from outer portions of the food stuff to the core of said food stuff. The duration of the thermal inertia phase 18 either has been empirically determined by several tests or depends on the core temperature detected by a temperature sensor inserted in the food stuff. In the latter case, the duration of the thermal inertia phase 18 need not to be determined and programmed by the manufacturer of the cooking oven.

Alternatively, the thermal cycling phase 16 is skipped, so that the thermal inertia phase 18 is performed directly after the heating up phase 14. In this case, the full amount of heating energy is transmitted into the oven cavity during the heating up phase 14. There is much more heating energy transmitted into the oven cavity than the food stuff can absorb during the heating up phase 14. Therefore, the losses are bigger as in the method mentioned above, in which the partial amount of heating energy is transmitted into the oven cavity during the heating up phase 14 and the residual amount of heating energy is transmitted into the oven cavity during the thermal cycling phase 16. When the food stuff reaches the predetermined core temperature, then the temperature in the oven cavity lower and the duration of the heating up phase 14 is longer than in the method mentioned above.

On the one hand, the oven cavity should be heated up with power as much as possible during the heating up phase 14. On the other hand, if too much power is used during the heating up phase 14, then an energy saturation of the oven cavity is reached before the end of energizing the heating element, so that the transmitted energy cannot be used completely.

Thus, according to the preferred embodiment, the time controlled section 10 includes the heating up phase 14, the thermal cycling phase 16 and the thermal inertia phase 18, wherein the amount of heating energy in the heating up phase 14 is limited.

For example, the preferred embodiment including the thermal cycling phase 16 is advantageous, if the food stuff is ready cooked for consumption already at the end of the heating up phase 14. Further, the thermal cycling phase 16 is advantageous in cooking situations, wherein the total cooking process requires further heating of the food stuff after the heating up phase 16, e.g. when the food stuff shall not only be cooked to a suitable degree, but additionally shall receive a browning.

The method according to the present invention relates to any heating methods, which comprise the initial heating up phase 14, the thermal inertia phase 18 and optionally the thermal cycling phase 16 between said heating up phase 14 and thermal inertia phase 18. The method according to the present invention is adapted, that at its end the food stuff has reached the desired core temperature. The present invention is applicable to any heating methods comprising further following steps of treating the food stuff inside the oven cavity, e.g. further heating in any heating mode, browning or a further thermal inertia phase.

The time based heating algorithm depends on the properties of the cooking oven. Typically, the volume of the oven cavity is between forty and seventy litres, while the mass of said oven cavity is between 9 kg and 11 kg.

In the following empiric investigations of the inventors are described, wherein a large oven cavity and a small oven cavity according to the prior art have been used. In this example, the large oven cavity has a volume of 65 litres, while the small oven cavity has a volume of 43 litres. In these experiments, a water-saturated construction test brick having a size of 230 mm x 114mm x 64 mm and a dry weight of 0.92 kg has been used. Said test brick is made of clay used for forming fired bricks, e.g. diatomite. The test brick comprises two drilled holes for receiving temperature sensor needles and is arranged in the centre of the oven cavity. The test brick is used as a model of food stuff. As heating mode only a forced convection heating mode has been used in the experiments. Said convection heating mode is performed by simultaneously activating a ring heating element arranged between a cavity rear wall and a fan cover arranged in front thereof and a corresponding convection fan enclosed by said ring heating element.

Typically, in the experiments an available heating energy amount of 360 Wh for the large oven cavity is used. Said heating energy amount corresponding to an A+++ energy level maximum amount of 380 Wh minus a safety margin of 20 Wh. In contrast, the heating energy amount of an A++ energy label would be 500 Wh in this case. For the small oven cavity the heating energy amount is 300 Wh to the A+++ energy level maximum amount of 320 Wh. In this case, the A++ energy label would be 430 Wh.

In order to reach a target core temperature of 55°C of the brick relative to the initial temperature, the ring heating element and the convection fan are allowed to run simultaneously during the heating up phase 14 for nine minutes in the large oven cavity model and for twelve minutes in the small oven cavity model in A+++ energy level. In contrast, the duration of the heating up phase 14 in A++ energy level would be twelve minutes for the large oven cavity model and sixteen minutes for the small oven cavity model. Typically, the initial temperature of the food stuff is between 4°C and 6°C.

During the heating up phase 14 the heating element was operated continuously without any interruption or modulation, so that the maximum energy is generated. The longer total time available for running the heating element in the small oven cavity model is possible, because the energy requirement is different for the smaller oven cavity and the heating element has a lower power, namely 1650 W. In contrast, the power of the heating element for the large cavity is 2400 W. In order to determine the total amount of heating energy that is available for heating the food stuff in practice, the example power of the ring heating element is 2400 W for the large oven cavity model, while the example power of the ring heating element for the small oven cavity model is 1650 W. The energy consumption is 360 Wh for the large oven cavity model in A+++ energy level for nine minutes. Similarly, for the small oven cavity model the energy consumption is 310 Wh with the heating element of 1650 W for twelve minutes. However, it should be considered that further small loads such as the convection fan also contributes to the energy consumption, but this would only be approximately 15 Wh.

In the following, examples of the method according to the present invention are described as a process flow.
1. Using the time based heating algorithm to heat the food stuff to the predetermined core temperature in the optimum method.
1.1. Heating up the thermal mass of the system, i.e. oven cavity, oven door and insulation, for a certain time, wherein a small amount of heating energy is transmitted to the food stuff, and wherein the first heating phase is the longest time. For example, the duration of the first heating phase is seven minutes for the A+++ energy level and the large oven cavity.
1.2. Turning off the heating element for a certain time, wherein the hot air fan is activated.
1.3. Turning on the heating element for a certain time, wherein the hot air fan is activated.
1.4. Repeating the steps 1.2 and 1.3 until the predetermined amount of energy, which is required or defined, has been transmitted, wherein the hot air fan is always on.
1.5. Using the residual thermal energy from the system to increase the core temperature of the food stuff.
1.6. Using the thermal mass of the food stuff in order to absorb the thermal energy from the system.
1.7. Using the cooling fan in the second and subsequent heating phases.
1.8. For the A++++ energy level, the cooling fan is not used at all.
1.9. After a certain time the temperature control mode 12 is switched on basing on the predetermined temperature. For example, the temperature control mode 12 is performed for browning the food stuff after increasing the core temperature in steps 1.1 to 1.5 and for food stuff, which requires a longer cooking time than the duration of the time control mode 10. The temperature control mode 12 continues the cooking process until the food stuff is ready. Cooking the food stuff according to steps 1.1 to 1.8 is the most efficient way to achieve the cooking result.

Alternatively, a food probe for detecting the core temperature of the food stuff is used.
2. Using the food probe for the steps 1.1 to 1.8.
2.1. Setting the core temperature for the food stuff with the food probe inserted by the user.
2.2. Heating up the thermal mass of the system, i.e. oven cavity, oven door, insulation, for a certain time, wherein a small amount of heating energy is transmitted to the food stuff. The first heating phase is the longest time, e.g. for the A+++ energy level and the large oven cavity about seven minutes.
2.3. Turning off the heating element for a certain time, wherein the hot air fan is always on.
2.4. Turning on the heating element for a certain time, wherein the hot air fan is always on.
2.5. Repeating steps 2.2 to 2.4 until the amount of energy, which is required and/or defined, is reached, wherein the hot air fan is always on.
2.6. Heating up the system per steps 2.2 to 2.5 until the core temperature of the food stuff reaches a predetermined percentage of the set core temperature.
2.7. Using the thermal mass of the food stuff to absorb the thermal energy from the system.
2.8. If the core temperature value is detected to drop relative to the defined temperature path, then a boost energy load is added to obtain the set core temperature.

This method saves energy relative to the current food probe method by utilizing the thermal energy of the system in order to heat up the thermal mass of the food. The current method continuously puts in energy into the system until the core temperature is reached.
3. Another use of this energy saving concept is when you know the food type and mass
3.1. Heating up the thermal mass of the system, i.e. oven cavity, oven door, insulation, wherein a small amount of energy is transmitted to the food stuff. The first heating phase is the longest time for the A+++ energy level and the large oven cavity is about seven minutes.
3.2. Turning off the heating element for a certain time, wherein the hot air fan is always on.
3.3. Turning on the heating element for a certain time, wherein the hot air fan is always on.
3.4. Repeating cycle steps 2.2 to 2.4 until the amount of energy, which is required and/or defined, has been reach, wherein the hot air fan is always on.
3.5. Knowing the type and mass of the food stuff, the time to stop the heating cycle can be determined in order to ensure that the thermal mass of the food stuff still obtains the core temperature.

The present invention can be generalized beyond the above examples. The invention replaces the prior art concept, wherein the energy consumption of the oven cavity is indirectly managed by controlling the temperature in the oven cavity rather than focusing on the uptake of the provided heating energy by the food stuff. Divergently, the present invention proposes to control the energy consumption of the oven cavity via an algorithm that splits up on/off of the heating elements during the predetermined total heating time specific for the food stuff. Thus, the specific heating time and its split up replaces the food stuff specific oven cavity temperature of the prior art cooking ovens.

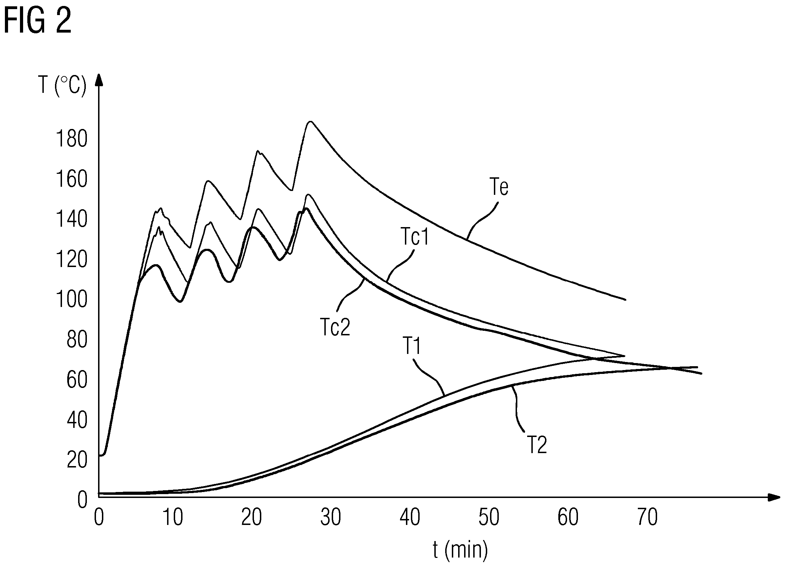

FIG 2 illustrates schematic diagrams of temperatures T1, T2, Tc1, Tc2 and Te as functions of time for two time control modes 10 according to the preferred embodiment of the present invention. The diagrams clarify the behaviour of the temperatures T1, T2, Tc1, Tc2 and Te during the heating up phase 14, the thermal cycling phase 16 and the thermal inertia phase 18 for the two different time control modes 10.

A temperature of the empty cavity Te, a first core temperature T1 and a first cavity temperature Tc1 relate to a time control mode 10, in which the duration of the heating up phase 14 is eleven minutes. A second core temperature T2 and a second cavity temperature Tc2 relate to a time control mode 10, in which the duration of the heating up phase 14 is twelve minutes.

During the heating phases 16 the temperature of the empty cavity Te, the first cavity temperature Tc1 and the second cavity temperature Tc2 increase rapidly, while the first core temperature T1 and the second core temperature T2 increase slowly. During the thermal cycling phase 16 the temperature of the empty cavity Te, the first cavity temperature Tc1 and the second cavity temperature Tc2 increase and decrease alternatingly, wherein the increasing is faster that the decreasing. Thus, the temperature of the empty cavity Te, the first cavity temperature Tc1 and the second cavity temperature Tc2 effectively increase during the thermal cycling phase 16. Further, the first core temperature T1 and the second core temperature T2 increase slowly during the thermal cycling phase 16.

During the thermal inertia phase 18 the temperature of the empty cavity Te, the first cavity temperature Tc1 and the second cavity temperature Tc2 decrease, while the first core temperature T1 and the second core temperature T2 increase. The first core temperature T1 and the first cavity temperature Tc1 become identical after fifty-nine minutes. In contrast, the second core temperature T2 and the second cavity temperature Tc2 become identical after sixty-six minutes. Thus, the shorter heating up phase 14 results in a longer duration until the thermal equilibrium of the oven cavity and the food stuff is obtained.

The thermal cycling phase 16 mentioned above provides the increased energy efficiency. The time control mode 10 without the thermal cycling phase 16, wherein the available energy is essentially transmitted to the oven cavity during the heating up phase 14, would result in an unduly long duration of the overall cooking process. The initial heating up phase 14 would be directly followed by thermal inertia phase 18 until the target core temperature of the food stuff has been reached. In this case, the duration of the heating up phase 14 would be maximal. If the oven cavity would be large, then the heating up phase 14 would be turned off after seven to nine minutes. If the oven cavity would be small, then the heating up phase 14 would be turned off after eight to ten minutes. For example, the large oven cavity is supplied by a 2400 Wh heating element, while the small oven cavity may be supplied by a 1650 Wh heating element, wherein the oven cavity is provided for the A++ energy level.

The number of switching on and off the heating power during the thermal cycling phase 16 is chosen according to the total heating time available in the respective cavity model. Thus, in the large cavity model the total heating time of thirteen minutes is most effectively split up into two or three heating periods including the initial heating up phase during the thermal cycling phase 16, while in the small cavity model the total heating time of sixteen minutes is most effectively split up into three to five, preferably four, heating periods. For example, in the large cavity model the heating up phase is seven minutes and three cycling phases, while in the small cavity model the heating up phase is eight minutes and four cycling phases. It has been found that additional heating periods during the thermal cycling phase 16 reduces the efficiency, since the duration for reaching the target core temperature increases. The total heating times mentioned above relate to the A++ energy level only, while said total heating times for the A+++ energy level would be smaller.

The invention also relates to an automatic controlling of the cooking oven by food stuff or recipe-specific cooking programs, which comprise corresponding algorithms programmed or updateable by the manufacturer of the cooking oven and spare the user of the cooking oven the need to determine himself any specific oven temperature.

The present invention allows the definition of an energy mode, which may be activated by a button. Said energy mode alters the method for controlling a cooking process in that the cooking results remain the same, but the duration of the cooking process increases, wherein energy is saved.

Further, the present invention allows the use of the food probe for detecting the core temperature of the food stuff, wherein said core temperature may be selected. Moreover, the present invention allows a smart cooking function, wherein the food stuff and the mass are selected. The use of the food probe and the smart cooking function also alter the method for controlling the cooking process, wherein the cooking results remain the same, but the duration of the cooking process increases, so that energy is saved.

### List of reference numerals

- 10: time control mode
- 12: temperature control mode
- 14: heating up phase
- 16: thermal cycling phase
- 18: thermal inertia phase

- T: core temperature
- T1: first core temperature
- T2: second core temperature
- Tc1: first cavity temperature
- Tc2: second cavity temperature
- Te: temperature of the empty cavity
- E: transmitted heating energy

## Claims

1. A method for controlling a cooking process in an oven cavity of a cooking oven, comprising
- placing food stuff inside the oven cavity,
- setting at least one cooking parameter,
- setting a maximum heating energy to be transferred into the oven cavity and/or the food stuff,
- determining a heating power profile of the heating power as a function of time during a cooking time depending on said at least one cooking parameter,
- wherein the total heating energy obtained by summing up or integrating the heating power of the heating profile over time for the cooking time is less than or equal to the maximum heating energy,
- heating the oven cavity and/or the food stuff by transferring heating power during said cooking time according to the determined heating profile in a time control mode,
- **characterized in that** the time control mode (10) defines the transmission of heating energy (E) to the oven cavity as function of the time (t) during said time control mode (10),
- wherein the time control mode comprises a heating up phase and a thermal inertia phase, wherein during the heating up phase (14) the oven cavity is heated up by activating at least one heating element of said oven cavity,
- wherein the activation and deactivation of the at least one heating element are predetermined and based on empiric and/or calculated data, and independent of any detected cooking parameters.

2. A method for controlling a cooking process in an oven cavity of a cooking oven according to claim 1, wherein:
- food stuff is arranged inside the oven cavity,
- at least one cooking parameter is set,
- the method comprises a time control mode (10) in the beginning of the cooking process,
- the time control mode (10) calculates a predetermined transmission of heating power to the oven cavity as function of the time (t) and a corresponding predetermined transmitted heating energy (E) during said time control mode (10),
- the heating power as function of the time (t) and the predetermined transmitted heating energy (E) base on empiric and/or calculated data and depends on the set cooking parameter,
- the time control mode (10) starts with the heating up phase (14),
- the heating up phase (14) is stopped, after the predetermined heating energy (E) has been transmitted to the oven cavity,
- during the thermal inertia phase (18) all heating elements of the oven cavity are deactivated, and
- the thermal inertia phase (18) is stopped, after the food stuff and the oven cavity should have reached a thermal equilibrium according to the empiric and/or calculated data.

3. The method according to claim 1 or claim 2, wherein the at least one cooking parameter is manually set by a user and/or automatically set by a cooking program.

4. The method according to any one of the preceding claims, wherein the at least one cooking parameter relates to one or more properties of the oven cavity and/or the cooking oven, in particular properties of the heating system such as heating elements to be used, and/or wherein the at least one cooking parameter relates to the type of food stuff or to one or more properties of the food stuff and/or wherein the at least one set cooking parameter is a set core temperature (T) of the food stuff at the end of the time control mode (10) and/or wherein the core temperature of the food stuff is detected by at least one food probe.

5. The method according to any one of the preceding claims, **characterised in that**
the predetermined transmitted heating energy (E) during the time control mode (10) or during the total cooking process is smaller than or equal to a maximum amount of heating energy transmitted to the oven cavity during the time control mode (10) or during the total cooking process.

6. The method according to claim 5,
wherein the at least one set cooking parameter is the maximum amount of heating energy transmitted to the oven cavity.

7. The method according to any one of the preceding claims,
wherein a plurality of heating power profiles of the heating power in dependence of the time (t) is predetermined on the basis of empiric and/or calculated data and stored in a memory, wherein in particular each heating power profile corresponds to a type and/or mass of the food stuff.

8. The method according to any one of the preceding claims,
wherein the function of the heating power in dependence of the time (t) is a continuous or a quasi-continuous function, wherein the time integral of said function is the predetermined transmitted heating energy (E).

9. The method according to any one of the claims 1 to 8,
wherein the heating power profile of the heating power in dependence of the time (t) comprises at least one rectangular or constant function, wherein a constant heating power is activated during first time intervals and the heating power is deactivated during second time intervals, and wherein the product of said constant heating power and total time of said first time intervals is the predetermined transmitted heating energy (E).

10. The method according to any one of the preceding claims,
wherein the time control mode (10) includes a thermal cycling phase (16), wherein said thermal cycling phase (16) is performed after the heating up phase (14) and before the thermal inertia phase (18), and wherein the at least one heating element of said oven cavity is alternatingly deactivated and activated.

11. The method according to claim 10,
wherein the predetermined heating energy transmitted to the oven cavity during the heating up phase (14) and the thermal cycling phase (16) depends on the at least one cooking parameter.

12. The method according to any one of the preceding claims,
wherein the at least one heating element is continuously activated during the heating up phase (14).

13. The method according to any one of the preceding claims,
wherein the relation of the transmitted heating energy (E) and the time (t) depends on the mass and kind or type of food stuff, the volume and the thermal capacity of the oven cavity and/or the insulation of the cooking oven.

14. The method according to any one of the preceding claims,
wherein
the numbers of activations and deactivations of the at least one heating element of the oven cavity depends on the mass and kind of food stuff, the volume and the thermal capacity of the oven cavity and/or the insulation of the cooking oven.

15. The method according to any one of the preceding claims,
wherein the durations of the activated and deactivated states of the at least one heating element of the oven cavity depends on the mass and kind of food stuff, the volume and the thermal capacity of the oven cavity and/or the insulation of the cooking oven.

16. The method according to any one of the preceding claims,
wherein the method comprises a temperature control mode (12), wherein the temperature control mode (12) is started, after the time control mode (10) has been finished.

17. The method according to claim 16,
**characterised in that**
the control of the at least one heating element in the temperature control mode (12) depends on at least one temperature detected in the oven cavity and/or in the food stuff.

18. A method for controlling a cooking process in an oven cavity of a cooking oven, according to any of claims 1 to 17, wherein:
- food stuff is arranged inside the oven cavity,
- the method comprises a time control mode (10) in the beginning of said method,
- the relation of the transmitted heating energy (E) and the time (t) bases on empiric and/or calculated data,
- the time control mode (10) starts with the heating up phase (14),
- the heating up phase (14) is stopped, after a predetermined heating energy has been transmitted to the oven cavity,
- the predetermined heating energy depends on a set core temperature of the food stuff,
- during the thermal inertia phase (18) all heating elements of the oven cavity are deactivated, and
- the thermal inertia phase (18) is stopped, after the core temperature of the food stuff in the oven cavity and the temperature in the oven cavity has equalised to each other or a set core temperature of said food stuff has been reached.

19. The method according to claim 18,
**characterised in that**
the predetermined heating energy transmitted to the oven cavity during the heating up phase (14) depends on the set core temperature of the food stuff in the oven cavity, when the core of the food stuff and the oven cavity are in thermal equilibrium.

20. The method according to claim 18,
**characterised in that**
the time control mode (10) includes a thermal cycling phase (16), wherein said thermal cycling phase (16) is performed after the heating up phase (14) and before the thermal inertia phase (18), and wherein the at least one heating element of said oven cavity is alternatingly deactivated and activated.

21. The method according to claim 20,
**characterised in that**
the predetermined heating energy transmitted to the oven cavity during the heating up phase (14) and the thermal cycling phase (16) depends on the set core temperature of the food stuff in the oven cavity, when the core of the food stuff and the oven cavity are in thermal equilibrium.

22. The method according to any one of the preceding claims,
**characterised in that**
the at least one heating element is continuously activated during the heating up phase (14).

23. The method according to any one of the preceding claims,
**characterised in that**
the relation of the transmitted heating energy (E) and the time (t) depends on the mass and kind of food stuff, the volume and the thermal capacity of the oven cavity and/or the insulation of the cooking oven.

24. The method according to any one of the preceding claims,
**characterised in that**
the numbers of activations and deactivations of the at least one heating element of the oven cavity depends on the mass and kind of food stuff, the volume and the thermal capacity of the oven cavity and/or the insulation of the cooking oven.

25. The method according to any one of the preceding claims,
**characterised in that**
the durations of the activated and deactivated states of the at least one heating element of the oven cavity depends on the mass and kind of food stuff, the volume and the thermal capacity of the oven cavity and/or the insulation of the cooking oven.

26. The method according to any one of the preceding claims,
**characterised in that**
the core temperature of the food stuff is detected by at least one food probe.

27. The method according to any one of the preceding claims,
**characterised in that**
the method comprises a temperature control mode (12), wherein the temperature control mode (12) is started, after the time control mode (10) has been finished.

28. The method according to claim 27,
**characterised in that**
the control of the at least one heating element in the temperature control mode (12) depends on at least one temperature detected in the oven cavity and/or in the food stuff.

29. A cooking oven with at least one an oven cavity,
**characterised in that**
the cooking oven is adapted for the method according to any one of the claims 1 to 28.

## Patentansprüche

1. Verfahren zum Steuern eines Kochvorgangs in einem Ofenhohlraum eines Backofens, wobei das Verfahren die folgenden Schritte umfasst:
- Anordnen von Lebensmitteln im Inneren des Ofenhohlraums,
- Einstellen wenigstens eines Kochparameters,
- Einstellen einer maximalen Heizenergie, die in den Ofenhohlraum und/oder auf das Lebensmittel übertragen werden soll,
- Bestimmen eines Heizleistungsprofils der Heizleistung als Funktion der Zeit während einer Kochzeit als Funktion des wenigstens einen Kochparameters,
- wobei die gesamte Heizenergie, die durch Aufsummieren oder Integrieren der Heizleistung des Heizprofils über die Zeit für die Kochzeit erhalten wird, kleiner oder gleich der maximalen Heizenergie ist,
- Aufheizen des Ofenhohlraums und/oder des Lebensmittels durch Übertragen von Heizleistung während der Kochzeit entsprechend dem vorgegebenen Heizprofil in einer Zeitsteuerungsbetriebsart,
- **dadurch gekennzeichnet, dass** die Zeitsteuerungsbetriebsart (10) die Übertragung von Heizenergie (E) an den Ofenhohlraum als Funktion der Zeit (t) während der Zeitsteuerungsbetriebsart (10) definiert,
- wobei die Zeitsteuerungsbetriebsart eine Aufheizphase und eine Phase thermischer Trägheit umfasst, wobei der Ofenhohlraum während der Aufheizphase (14) durch Einschalten wenigstens eines Heizelements des Ofenhohlraums aufgeheizt wird,
- wobei das Einschalten und das Ausschalten des wenigstens einen Heizelements vorgegeben sind und auf empirischen und/oder berechneten Daten beruhen und unabhängig von detektierten Kochparametern sind.

2. Verfahren zum Steuern eines Kochvorgangs in einem Ofenhohlraum eines Backofens nach Anspruch 1, wobei:
- Lebensmittel in dem Ofenhohlraum angeordnet werden,
- wenigstens ein Kochparameter eingestellt wird,
- das Verfahren eine Zeitsteuerungsbetriebsart (10) zu Beginn des Kochvorgangs umfasst,
- die Zeitsteuerungsbetriebsart (10) eine vorgegebene Übertragung von Heizleistung an den Ofenhohlraum als Funktion der Zeit (t) und einer entsprechenden vorgegebenen übertragenen Heizenergie (E) während der Zeitsteuerungsbetriebsart (10) berechnet,
- die Heizleistung als Funktion der Zeit (t) und der vorgegebenen übertragenen Heizenergie (E) auf empirischen und/oder berechneten Daten beruht und von dem eingestellten Kochparameter abhängt,
- die Zeitsteuerungsbetriebsart (10) mit der Aufheizphase (14) startet,
- die Aufheizphase (14) gestoppt wird, nachdem die vorgegebene Heizenergie (E) an den Ofenhohlraum übertragen worden ist,
- während der Phase (18) thermischer Trägheit alle Heizelemente des Ofenhohlraums ausgeschaltet sind und
- die Phase (18) thermischer Trägheit gestoppt wird, nachdem die Lebensmittel und der Ofenhohlraum entsprechend den empirischen und/oder berechneten Daten ein thermisches Gleichgewicht erreicht haben sollten.

3. Verfahren nach Anspruch 1 oder Anspruch 2, wobei der wenigstens eine Kochparameter durch einen Benutzer manuell eingestellt wird und/oder durch ein Kochprogramm automatisch eingestellt wird.

4. Verfahren nach einem der vorhergehenden Ansprüche, wobei sich der wenigstens eine Kochparameter auf eine oder mehrere Eigenschaften des Ofenhohlraums und/oder des Backofens bezieht, insbesondere auf Eigenschaften des Heizsystems wie etwa die verwendeten Heizelemente, und/oder wobei sich der wenigstens eine Kochparameter auf den Lebensmitteltyp oder auf eine oder mehrere Eigenschaften der Lebensmittel bezieht, und/oder wobei der wenigstens eine eingestellte Kochparameter eine eingestellte Kerntemperatur (T) des Lebensmittels am Ende der Zeitsteuerungsbetriebsart (10) ist und/oder wobei die Kerntemperatur des Lebensmittels durch wenigstens einen Lebensmittel-Messfühler detektiert wird.

5. Verfahren nach einem der vorhergehenden Ansprüche, **dadurch gekennzeichnet, dass**
die vorgegebene übertragene Heizenergie (E) während der Zeitsteuerungsbetriebsart (10) oder während des gesamten Kochvorgangs kleiner oder gleich einem maximalen Betrag der Heizenergie ist, die während der Zeitsteuerungsbetriebsart (10) oder während des gesamten Kochvorgangs an den Ofenhohlraum übertragen wird.

6. Verfahren nach Anspruch 5,
wobei der wenigstens eine eingestellte Kochparameter der maximale Betrag der Heizenergie ist, die an den Ofenhohlraum übertragen wird.

7. Verfahren nach einem der vorhergehenden Ansprüche, wobei mehrere Heizleistungsprofile der Heizleistung als Funktion der Zeit (t) auf der Basis von empirischen und/oder berechneten Daten ermittelt werden und in einem Speicher gespeichert werden, wobei insbesondere jedes Heizleistungsprofil einem Typ und/oder einer Masse des Lebensmittels entspricht.

8. Verfahren nach einem der vorhergehenden Ansprüche, wobei die Funktion der Heizleistung als Funktion der Zeit (t) eine stetige oder eine quasistetige Funktion ist, wobei das zeitliche Integral der Funktion die vorgegebene übertragene Heizenergie (E) ist.

9. Verfahren nach einem der Ansprüche 1 bis 8, wobei das Heizleistungsprofil der Heizleistung als Funktion der Zeit (t) wenigstens eine Rechteckfunktion oder eine konstante Funktion umfasst, wobei eine konstante Heizleistung während erster Zeitintervalle eingeschaltet wird und die Heizleistung während zweiter Zeitintervalle ausgeschaltet wird und wobei das Produkt der konstanten Heizleistung und der Gesamtzeit der ersten Zeitintervalle die vorgegebene übertragene Heizenergie (E) ist.

10. Verfahren nach einem der vorhergehenden Ansprüche, wobei die Zeitsteuerungsbetriebsart (10) eine thermische Zyklierungsphase (16) umfasst, wobei die thermische Zyklierungsphase (16) nach der Aufheizphase (14) und vor der Phase (18) thermischer Trägheit durchgeführt wird und wobei das wenigstens eine Heizelement des Ofenhohlraums abwechselnd ausgeschaltet und eingeschaltet wird.

11. Verfahren nach Anspruch 10, wobei die vorgegebene Heizenergie, die während der Aufheizphase (14) und der thermischen Zyklierungsphase (16) an den Ofenhohlraum übertragen wird, von dem wenigstens einen Kochparameter abhängt.

12. Verfahren nach einem der vorhergehenden Ansprüche, wobei das wenigstens eine Heizelement während der Aufheizphase (14) ununterbrochen eingeschaltet ist.

13. Verfahren nach einem der vorhergehenden Ansprüche, wobei die Beziehung zwischen der übertragenen Heizenergie (E) und der Zeit (t) von der Masse und der Art oder dem Typ des Lebensmittels, dem Volumen und der Wärmekapazität des Ofenhohlraums und/oder der Isolierung des Backofens abhängt.

14. Verfahren nach einem der vorhergehenden Ansprüche, wobei die Anzahl der Einschaltvorgänge und Ausschaltvorgänge des wenigstens einen Heizelements des Ofenhohlraums von der Masse und der Art des Lebensmittels, dem Volumen und der Wärmekapazität des Ofenhohlraums und/oder der Isolierung des Backofens abhängt.

15. Verfahren nach einem der vorhergehenden Ansprüche, wobei die Dauer der eingeschalteten und der ausgeschalteten Zustände des wenigstens einen Heizelements des Ofenhohlraums von der Masse und der Art des Lebensmittels, dem Volumen und der Wärmekapazität des Ofenhohlraums und/oder der Isolierung des Backofens abhängt.

16. Verfahren nach einem der vorhergehenden Ansprüche, wobei das Verfahren eine Temperatursteuerungsbetriebsart (12) umfasst, wobei die Temperatursteuerungsbetriebsart (12) gestartet wird, nachdem die Zeitsteuerungsbetriebsart (10) beendet worden ist.

17. Verfahren nach Anspruch 16, **dadurch gekennzeichnet, dass**
die Steuerung des wenigstens einen Heizelements in der Temperatursteuerungsbetriebsart (12) von wenigstens einer Temperatur abhängt, die im Ofenhohlraum und/oder im Lebensmittel detektiert wird.

18. Verfahren zum Steuern eines Kochvorgangs in einem Ofenhohlraum eines Backofens nach einem der Ansprüche 1 bis 17, wobei:
- Lebensmittel im Inneren des Hohlraums angeordnet werden,
- das Verfahren eine Zeitsteuerungsbetriebsart (10) zu Beginn des Verfahrens umfasst,
- die Beziehung zwischen der übertragenen Heizenergie (E) und der Zeit (t) auf empirischen und/oder berechneten Daten beruht,
- die Zeitsteuerungsbetriebsart (10) mit der Aufheizphase (14) startet,
- die Aufheizphase (14) gestoppt wird, nachdem eine vorgegebene Heizenergie an den Ofenhohlraum übertragen worden ist,
- die vorgegebene Heizenergie von einer eingestellten Kerntemperatur des Lebensmittels abhängt,
- während der Phase (18) thermischer Trägheit alle Heizelemente des Ofenhohlraums ausgeschaltet sind und
- die Phase (18) thermischer Trägheit gestoppt wird, nachdem sich die Kerntemperatur des Lebensmittels in dem Ofenhohlraum und die Temperatur in dem Ofenhohlraum aneinander angeglichen haben oder eine eingestellte Kerntemperatur des Lebensmittels erreicht worden ist.

19. Verfahren nach Anspruch 18, **dadurch gekennzeichnet, dass**
die vorgegebene Heizenergie, die während der Aufheizphase (14) an den Ofenhohlraum übertragen wird, von der eingestellten Kerntemperatur des Lebensmittels in dem Ofenhohlraum abhängt, wenn sich der Kern des Lebensmittels und der Ofenhohlraum im thermischen Gleichgewicht befinden.

20. Verfahren nach Anspruch 18, **dadurch gekennzeichnet, dass**
die Zeitsteuerungsbetriebsart (10) eine thermische Zyklierungsphase (16) umfasst, wobei die thermische Zyklierungsphase (16) nach der Aufheizphase (14) und vor der Phase (18) thermischer Trägheit durchgeführt wird und wobei das wenigstens eine Heizelement des Ofenhohlraums abwechselnd ausgeschaltet und eingeschaltet wird.

21. Verfahren nach Anspruch 20, **dadurch gekennzeichnet, dass**
die vorgegebene Heizenergie, die während der Aufheizphase (14) und der thermischen Zyklierungsphase (16) an den Ofenhohlraum übertragen wird, von der eingestellten Kerntemperatur des Lebensmittels in dem Ofenhohlraum abhängt, wenn sich der Kern des Lebensmittels und der Ofenhohlraum im thermischen Gleichgewicht befinden.

22. Verfahren nach einem der vorhergehenden Ansprüche, **dadurch gekennzeichnet, dass**
das wenigstens eine Heizelement während der Aufheizphase (14) ununterbrochen eingeschaltet ist.

23. Verfahren nach einem der vorhergehenden Ansprüche, **dadurch gekennzeichnet, dass**
die Beziehung zwischen der übertragenen Heizenergie (E) und der Zeit (t) von der Masse und der Art des Lebensmittels, dem Volumen und der Wärmekapazität des Ofenhohlraums und/oder der Isolierung des Backofens abhängt.

24. Verfahren nach einem der vorhergehenden Ansprüche, **dadurch gekennzeichnet, dass**
die Anzahl der Einschaltvorgänge und Ausschaltvorgänge des wenigstens einen Heizelements des Ofenhohlraums von der Masse und der Art des Lebensmittels, dem Volumen und der Wärmekapazität des Ofenhohlraums und/oder der Isolierung des Backofens abhängt.

25. Verfahren nach einem der vorhergehenden Ansprüche, **dadurch gekennzeichnet, dass**
die Zeitdauer der eingeschalteten und ausgeschalteten Zustände des wenigstens einen Heizelements des Ofenhohlraums von der Masse und der Art des Lebensmittels, dem Volumen und der Wärmekapazität des Ofenhohlraums und/oder der Isolierung des Backofens abhängt.

26. Verfahren nach einem der vorhergehenden Ansprüche, **dadurch gekennzeichnet, dass**
die Kerntemperatur des Lebensmittels durch wenigstens einen Lebensmittel-Messfühler detektiert wird.

27. Verfahren nach einem der vorhergehenden Ansprüche, **dadurch gekennzeichnet, dass**
das Verfahren eine Temperatursteuerungsbetriebsart (12) umfasst, wobei die Temperatursteuerungsbetriebsart (12) gestartet wird, nachdem die Zeitsteuerungsbetriebsart (10) beendet worden ist.

28. Verfahren nach Anspruch 27, **dadurch gekennzeichnet, dass**
die Steuerung des wenigstens einen Heizelements in der Temperatursteuerungsbetriebsart (12) von wenigstens einer Temperatur abhängt, die im Ofenhohlraum und/oder im Lebensmittel detektiert wird.

29. Backofen mit wenigstens einem Ofenhohlraum, **dadurch gekennzeichnet, dass**
der Backofen für das Verfahren nach einem der Ansprüche 1 bis 28 ausgelegt ist.

## Revendications

1. Procédé de régulation d'un processus de cuisson dans une cavité de four d'un four de cuisson, comprenant
- la mise en place d'un produit alimentaire à l'intérieur de la cavité de four,
- le réglage d'au moins un paramètre de cuisson,
- le réglage d'une énergie de chauffage maximale à transférer dans la cavité de four et/ou le produit alimentaire,
- la détermination d'un profil de puissance de chauffage de la puissance de chauffage en fonction du temps durant un temps de cuisson dépendant dudit au moins un paramètre de cuisson,
- l'énergie de chauffage totale obtenue par sommation ou intégration dans le temps de la puissance de chauffage du profil de chauffage pour le temps de cuisson étant inférieure ou égale à l'énergie de chauffage maximale,
- le chauffage de la cavité de four et/ou du produit alimentaire par transfert de puissance de chauffage durant ledit temps de cuisson selon le profil de chauffage déterminé dans un mode de régulation en temps,
- **caractérisé en ce que** le mode de régulation en temps (10) définit la transmission d'énergie de chauffage (5) à la cavité de four en fonction du temps (t) durant ledit mode de régulation en temps (10),
- le mode de régulation en temps comprenant une phase de montée en température et une phase d'inertie thermique ; durant la phase de montée en température (14), la cavité de four étant montée en température par activation d'au moins un élément chauffant de ladite cavité de four,
- l'activation et la désactivation de l'au moins un élément chauffant étant prédéterminées et basées sur des données empiriques et/ou calculées, et indépendantes d'un quelconque paramètre de cuisson détecté.

2. Procédé de régulation d'un processus de cuisson dans une cavité de four d'un four de cuisson selon la revendication 1, dans lequel :
- un produit alimentation est disposé à l'intérieur de la cavité de four,
- au moins un paramètre de cuisson est réglé,
- le procédé comprend un mode de régulation en temps (10) au début du processus de cuisson,
- le mode de régulation en temps (10) calcule une transmission prédéterminée de puissance de chauffage à la cavité de four en fonction du temps (t) et une énergie de chauffage transmise prédéterminée (E) correspondante durant ledit mode de régulation en temps (10),
- la puissance de chauffage en fonction du temps (t) et l'énergie de chauffage transmise prédéterminée (E) sont basées sur des données empiriques et/ou calculées et dépendent du paramètre de cuisson réglé,
- le mode de régulation en temps (10) commence par la phase de montée en température (14),
- la phase de montée en température (14) prend fin après que l'énergie de chauffage prédéterminée (E) a été transmise à la cavité de four,
- durant la phase d'inertie thermique (18), tous les éléments chauffants de la cavité de four sont désactivés, et
- la phase d'inertie thermique (18) prend fin après que le produit alimentaire et la cavité de four sont censés avoir atteint un équilibre thermique selon les données empiriques et/ou calculées.

3. Procédé selon la revendication 1 ou la revendication 2, dans lequel l'au moins un paramètre de cuisson est réglé manuellement par un utilisateur et/ou réglé automatiquement par un programme de cuisson.

4. Procédé selon l'une quelconque des revendications précédentes,
dans lequel l'au moins un paramètre de cuisson concerne une ou plusieurs propriétés de la cavité de four et/ou du four de cuisson, plus particulièrement des propriétés du système de chauffage notamment d'éléments chauffants à utiliser, et/ou dans lequel l'au moins un paramètre de cuisson concerne le type de produit alimentaire ou une ou plusieurs propriétés du produit alimentaire et/ou dans lequel l'au moins un paramètre de cuisson est une température à cœur réglée (T) du produit alimentaire à la fin du mode de régulation en temps (10) et/ou dans lequel la température à cœur du produit alimentaire est détectée par au moins une sonde alimentaire.

5. Procédé selon l'une quelconque des revendications précédentes,
**caractérisé en ce que**
l'énergie de chauffage transmise prédéterminée (E) durant le mode de régulation en temps (10) ou durant le processus de cuisson complet est inférieure ou égale à une quantité maximale d'énergie de chauffage transmise à la cavité de four durant le mode de régulation en temps (10) ou durant le processus de cuisson complet.

6. Procédé selon la revendication 5,
dans lequel l'au moins un paramètre de cuisson réglé est la quantité maximale d'énergie de chauffage transmise à la cavité de four.

7. Procédé selon l'une quelconque des revendications précédentes,
dans lequel une pluralité de profils de puissance de chauffage de la puissance de chauffage dépendant du temps (t) est prédéterminée sur la base de données empiriques et/ou calculées et enregistrée dans une mémoire, chaque profil de puissance de chauffage correspondant plus particulièrement à un type et/ou une masse du produit alimentaire.

8. Procédé selon l'une quelconque des revendications précédentes,
dans lequel la fonction de la puissance de chauffage dépendant du temps (t) est une fonction continue ou quasi continue, l'intégrale dans le temps de ladite fonction étant l'énergie de chauffage transmise prédéterminée (E).

9. Procédé selon l'une quelconque des revendications 1 à 8,
dans lequel le profil de puissance de chauffage de la puissance de chauffage dépendant du temps (t) comprend au moins une fonction rectangulaire ou constante, dans lequel une puissance de chauffage constante est activée durant des premiers intervalles de temps et la puissance de chauffage est désactivée durant des deuxièmes intervalles de temps, et dans lequel le produit de ladite puissance de chauffage constante et du temps total desdits premiers intervalles de temps est l'énergie de chauffage transmise prédéterminée (E).

10. Procédé selon l'une quelconque des revendications précédentes,
dans lequel le mode de régulation en temps (10) comporte une phase de cyclage thermique (16), dans lequel ladite phase de cyclage thermique (16) est réalisée après la phase de montée en température (14) et avant la phase d'inertie thermique (18), et dans lequel l'au moins un élément chauffant de ladite cavité de four est désactivé et activé en alternance.

11. Procédé selon la revendication 10,
dans lequel l'énergie de chauffage prédéterminée transmise à la cavité de four durant la phase de montée en température (14) et la phase de cyclage thermique (16) dépend de l'au moins un paramètre de cuisson.

12. Procédé selon l'une quelconque des revendications précédentes,
dans lequel l'au moins un élément chauffant est activé de façon continue durant la phase de montée en température (14).

13. Procédé selon l'une quelconque des revendications précédentes, dans lequel la relation entre l'énergie de chauffage transmise (E) et le temps (t) dépend de la masse et du genre ou type de produit alimentaire, du volume et de la capacité thermique de la cavité de four et/ou de l'isolation du four de cuisson.

14. Procédé selon l'une quelconque des revendications précédentes,
dans lequel
les nombres d'activations et de désactivations de l'au moins un élément chauffant de la cavité de four dépendent de la masse et du genre de produit alimentaire, du volume et de la capacité thermique de la cavité de four et/ou de l'isolation du four de cuisson.

15. Procédé selon l'une quelconque des revendications précédentes,
dans lequel les durées des états activés et désactivés de l'au moins un élément chauffant de la cavité de four dépendent de la masse et du genre de produit alimentaire, du volume et de la capacité thermique de la cavité de four et/ou de l'isolation du four de cuisson.

16. Procédé selon l'une quelconque des revendications précédentes,
lequel procédé comprend un mode de régulation en température (12), le mode de régulation en température (12) démarrant lorsque le mode de régulation en temps (10) a pris fin.

17. Procédé selon la revendication 16,
**caractérisé en ce que**
la régulation de l'au moins un élément chauffant dans le mode de régulation en température (12) dépend d'au moins une température détectée dans la cavité de four et/ou dans le produit alimentaire.

18. Procédé de régulation d'un processus de cuisson dans une cavité de four d'un four de cuisson selon l'une quelconque des revendications 1 à 17, dans lequel :
- un produit alimentation est disposé à l'intérieur de la cavité de four,
- le procédé comprend un mode de régulation en temps (10) au début dudit procédé,
- la relation entre l'énergie de chauffage transmise (E) et le temps (t) est basée sur des données empiriques et/ou calculées,
- le mode de régulation en temps (10) commence par la phase de montée en température (14),
- la phase de montée en température (14) prend fin après qu'une énergie de chauffage prédéterminée a été transmise à la cavité de four,
- l'énergie de chauffage prédéterminée dépend d'une température à cœur réglée du produit alimentaire,
- durant la phase d'inertie thermique (18), tous les éléments chauffants de la cavité de four sont désactivés, et
- la phase d'inertie thermique (18) prend fin après que la température à cœur du produit alimentaire dans la cavité de four et la température dans la cavité de four se sont équilibrées ou une température à cœur réglée dudit produit alimentaire a été atteinte.

19. Procédé selon la revendication 18,
**caractérisé en ce que**
l'énergie de chauffage prédéterminée transmise à la cavité de four durant la phase de montée en température (14) dépend de la température à cœur réglée du produit alimentaire dans la cavité de four lorsque le cœur du produit alimentaire et la cavité de four sont à l'équilibre thermique.

20. Procédé selon la revendication 18,
**caractérisé en ce que**
le mode de régulation en temps (10) comporte une phase de cyclage thermique (16), ladite phase de cyclage thermique (16) étant réalisée après la phase de montée en température (14) et avant la phase d'inertie thermique (18), et l'au moins un élément chauffant de ladite cavité de four étant désactivé et activé en alternance.

21. Procédé selon la revendication 20,
**caractérisé en ce que**
l'énergie de chauffage prédéterminée transmise à la cavité de four durant la phase de montée en température (14) et la phase de cyclage thermique (16) dépend de la température à cœur réglée du produit alimentaire dans la cavité de four lorsque le cœur du produit alimentaire et la cavité de four sont à l'équilibre thermique.

22. Procédé selon l'une quelconque des revendications précédentes,
**caractérisé en ce que**
l'au moins un élément chauffant est activé de façon continue durant la phase de montée en température (14).

23. Procédé selon l'une quelconque des revendications précédentes,
**caractérisé en ce que**
la relation entre l'énergie de chauffage transmise (E) et le temps (t) dépend de la masse et du genre de produit alimentaire, du volume et de la capacité thermique de la cavité de four et/ou de l'isolation du four de cuisson.

24. Procédé selon l'une quelconque des revendications précédentes,
**caractérisé en ce que**
les nombres d'activations et de désactivations de l'au moins un élément chauffant de la cavité de four dépendent de la masse et du genre de produit alimentaire, du volume et de la capacité thermique de la cavité de four et/ou de l'isolation du four de cuisson.

25. Procédé selon l'une quelconque des revendications précédentes,
**caractérisé en ce que**
les durées des états activés et désactivés de l'au moins un élément chauffant de la cavité de four dépendent de la masse et du genre de produit alimentaire, du volume et de la capacité thermique de la cavité de four et/ou de l'isolation du four de cuisson.

26. Procédé selon l'une quelconque des revendications précédentes,
**caractérisé en ce que**
la température à cœur du produit alimentaire est détectée par au moins une sonde alimentaire.

27. Procédé selon l'une quelconque des revendications précédentes,
**caractérisé en ce que**
le procédé comprend un mode de régulation en température (12),
le mode de régulation en température (12) démarrant lorsque le mode de régulation en temps (10) a pris fin.

28. Procédé selon la revendication 27,
**caractérisé en ce que**
la régulation de l'au moins un élément chauffant dans le mode de régulation en température (12) dépend d'au moins une température détectée dans la cavité de four et/ou dans le produit alimentaire.

29. Four de cuisson doté d'au moins une cavité de four,
**caractérisé en ce que**
le four de cuisson est adapté au procédé selon l'une quelconque des revendications 1 à 28.
